# DEMANDE DE BREVET EUROPEEN

(11) **EP 0 696 426 A1**
(43) Date de publication de la demande: **14.02.1996**
(21) Numéro de dépôt: 94112683.1
(22) Date de dépôt: 13.08.1994
(51) Int. Cl.: A23C 9/15, A23C 9/13, A23C 19/05, A23J 1/20

(54) **Procédé de fabrication d'un agent de texture pour produits laitiers**

(71) Demandeur: SOCIETE DES PRODUITS NESTLE S.A., CH-1800 Vevey (CH)
(72) Inventeur: Bisson, Jean-Pierre, F-14000 Caen (FR); Prella, Giovanni, I-13100 Vercelli (IT)
(74) Mandataire: Archambault, Jean

(57) **Abrégé**

Pour fabriquer un agent de texture pour produits laitiers, on traite thermiquement une matière première comprenant des protéines sériques et de la caséine dans des proportions, à un pH et dans des conditions de durée et de température définis, de manière à former des coprécipités, que l'on soumet à un fort cisaillement, que l'on concentre et que l'on sèche.

L'agent de texture, d'origine purement laitière, améliore en particulier les propriétés organoleptiques des yaourts et fromages frais maigres.

## Description

La présente invention se rapporte aux agents de texture à base de composants purement laitiers pour produits laitiers, notamment pour yaourts, fromages frais, crèmes glacées ou sauces.

De nombreux développements ont été effectués dans le domaine des substituts de matière grasse dans les produits laitiers exempts de matière grasse. On a ainsi obtenu des améliorations de texture en mettant en oeuvre des protéines de lactosérum micronisées. On peut citer, par exemple, US-A-5096731 qui concerne un procédé d'amélioration de la texture des yaourts maigres par addition de protéine microparticulaire à l'état de concentré liquide. Selon ce document, la protéine et traitée thermiquement de manière ménagée et soumise à un fort cisaillement dans un cuiseur. La protéine mise en oeuvre est soit la caséine en présence de blanc d'oeuf et de pectine, soit la protéine de lactosérum seule. Cependant, les produits obtenus à partir de lactosérum seul à titre d'agent de texture présentent des défauts de conservation dans le temps.

C'est pourquoi on a utilisé jusqu'à présent un mélange gélatine-protéine sérique comme agent de texture des produits maigres du genre des yaourts. Un tel agent convient du point de vue organoleptique, mais les produits ne peuvent malheureusement pas bénéficier de l'appellation yaourt car ils contiennent des ingrédients étrangers au lait. De plus, l'agent de texture doit être dissout séparément à chaud dans l'eau avant de pouvoir être incorporé dans le lait destiné à la production des yaourts.

L'invention a pour but de remédier aux inconvénients des méthodes d'amélioration connues des produits laitiers, en particulier maigres.

Le procédé selon l'invention est caractérisé par le fait que l'on prépare une matière première lactique contenant de la caséine et des protéines sériques dans un rapport pondéral caséine: protéines sériques de 70:30 à 40:60, que l'on ajuste le cas échéant le pH à 6,1-6,7 par addition d'un agent acidifiant, que l'on soumet le mélange à un traitement thermique à 70-95°C pendant 1-15 min de manière à former des coprécipités, qu'on le soumet à un fort cisaillement et qu'on le sèche.

Une matière première lactique selon l'invention peut être un lait écrémé ou un produit équivalent à un lait écrémé, par exemple un babeurre doux, additionné de protéines sériques. Les protéines sériques proviennent de lactosérum doux et sont obtenues par une méthode qui maintient en grande partie leur état natif, par exemple par ultrafiltration, puis séchage et elles se présentent alors sous forme de concentrat. Dans le contexte de l'invention, on entend par "en grande partie à l'état natif", le fait que les protéines sériques sont peu dénaturées, au maximum à environ 20 %, par exemple lors de leur séchage.

Pour mettre en oeuvre le procédé, on ajoute les protéines sériques, par exemple sous forme de poudre, à du lait écrémé, à un taux de matières sèches du mélange d'environ 10-13 % en poids, dans les proportions pondérales de caséine: protéines sériques de 70:30 à 40:60, de préférence de 60:40 à 45:55 et avantageusement par exemple d'environ 55:45. On ajuste le pH du mélange à 6,1-6,7 et de préférence à environ 6,4 par addition, si nécessaire, d'un agent acidifiant. L'agent acidifiant peut être un acide de qualité alimentaire, par exemple l'acide lactique ou apporté par se fermentation lactique, par exemple une acidification biologique produisant l'acide lactique nécessaire. Le mélange doit être mis en solution sous agitation pendant le temps nécessaire à la réhydratation des protéines sériques, de préférence par exemple environ 30 min.

On le fait passer ensuite dans un appareillage dans lequel il est traité thermiquement.

On peut utiliser à cet effet un ou de préférence deux échangeurs à surface raclée montés en série, qui assurent une montée en température, par exemple à 70-72°C, puis à se température d'environ 85°C et un maintien à cette température pendant environ 10 min. On peut remplacer le second échangeur à surface raclée par un échangeur à plaques ou tubulaire, lequel assure le temps de passage correspondant au maintien à la température supérieure désirée indiquée précédemment.

On peut également utiliser un échangeur à plaques associé à une pompe positive, à condition de réaliser une montée progressive en température, puis un maintien, par exemple pendant environ 5 min. à environ 90°C. On peut encore envisager un chauffage ohmique produisant un résultat équivalent.

Sans vouloir se lier à une quelconque théorie, on peut penser que le traitement thermique appliqué permet la dénaturation des protéines sériques et leur hydratation, de manière à former des coprécipités avec la caséine.

Après le traitement thermique, on soumet le mélange thermisé de préférence à une homogénéisation dans des conditions poussées, en un ou deux étages, à une pression globale de 300-400 bar, de préférence en deux étages, par exemple d'abord à environ 300-350 bar dans le premier étage, puis à environ 50 bar dans le second, de préférence à une température d'environ 65-70°C . En variante on peut utiliser tout appareil assurant un fort cisaillement, par exemple un moulin colloïdal ou un dispositif de lissage.

Une fois le cisaillement effectué, on concentre le liquide, par exemple dans un évaporateur, puis on le sèche par pulvérisation dans une tour de séchage, dans des conditions moyennes, c'est à dire pas trop sévères.

L'agent de texture préparé par le procédé de l'invention peut être utilisé à raison de 2 à 6 %, de préférence à environ 3 % en poids dans le lait écrémé, ou dans un lait partiellement écrémé ou entier, de préférence cru pour des raisons organoleptiques.

L'agent de texture peut être utilisé dans les produits frais fermentés, par exemple les yaourts étuvés ou brassés, les fromages frais, les crèmes glacées et les sauces.

Les exemples ci-après illustrent l'invention. Dans ceux-ci, les pourcentages et parties sont en poids, sauf indication contraire.

### Exemple 1

### Production d'un agent de texture pour produits frais fermentés

On mélange du lait écrémé cru avec des protéines de lactosérum doux de fromagerie ultrafiltrées ayant un taux de dénaturation inférieur à 20 % dans les proportions caséine: protéines sériques 55:45, puis on agite le mélange pendant 30 min. On acidifie ensuite le mélange avec une solution aqueuse d'acide lactique à 35 %, jusqu'au pH de 6,4.

En utilisant deux échangeurs à surface raclée montés en série, qui assurent une montée en température, à 70-72°C, puis à une température de 85°C, on fait passer le mélange pendant 10 min. On refroidit le floculat fin ainsi obtenu à 65-70°C sur un échangeur à plaques, puis on l'homogénéise à la même température sur un appareil à deux têtes, à 300 bar sur la première tête et 50 bar sur la seconde. On concentre alors l'homogénéisat dans un évaporateur à flots tombants jusqu'à 30-35 % de matière sèche, puis on séche le concentrat dans une tour de séchage avec un courant d'air entrant à 190°C et sortant à 90°C. La poudre finale a un extrait sec de l'ordre de 95 %.

### Exemple 2

On procède comme à l'exemple 1 à ceci près que le traitement thermique est effectué sur un échangeur à plaques à 70°C, puis 90°C, avec un temps de chambrage de 5 min. La suite des opérations est la même que précédemment à partir de l'homogénéisation.

### Exemple 3

On procède comme à l'exemple 1 à ceci près que l'acidification amenant le mélange au pH de 6,4 a lieu par voie biologique, avec des ferments lactiques mésophiles ou thermophiles.

### Exemples 4-8

On procède comme à l'exemple 1 en variant uniquement le pH avant le traitement thermique. Les agents de texture obtenus diffèrent par leurs propriétés fonctionnelles lorsqu'ils sont ajoutés à des yaourts étuvés maigres à raison de 3 %, ce que montre leur force de gel mesurée sur analyseur de texture Stevens avec un module de diamètre 25 mm, une longeur de 20 mm et une vitesse de pénétration de 1 mm/s, comme indiqué dans le tableau 1 ci-après.

**Tableau 1**

| Exemple | 4 | 5 | 6 | 7 | 8 |
|---|---|---|---|---|---|
| pH | 6,1 | 6,3 | 6,4 | 6,5 | 6,7 |
| Force de gel, g | 100 | 135 | 138 | 172 | 192 |

On remarque que le gel de l'exemple 4 est mou, cependant que celui de l'exemple 8 est ferme.

### Exemples 9-11

On procède comme à l'exemple 1 en variant seulement le rapport caséine: protéines sériques avant le traitement thermique. Les agents de texture obtenus diffèrent par leurs propriétés fonctionnelles et organoleptiques lorsqu'ils sont ajoutés à des yaourts étuvés maigres à raison de 3 %. Les résultats de leur évaluation organoleptique par un jury de dégustateurs sont indiqués dans le tableau 2 ci-après.

**Tableau 2**

| Exemple | 9 | 10 | 11 |
|---|---|---|---|
| Rapport caséine: protéines sériques | 70: 30 | 55: 45 | 40: 60 |
| Dégustation | Texture farineuse | Texture onctueuse | Texture cassante et granuleuse |

### Exemple 12

### Production de yaourt maigre à 0% de matière grasse, étuvé

Dans 100 parties de lait écrémé on dissout à froid 3 parties de poudre d'agent de texture obtenu selon l'exemple 1 sous agitation. La dissolution s'opère facilement. On traite alors le liquide par réchauffage à 75°C, homogénéisation à 150 bar avec deux étages, pasteurisation à 105°C pendant 2 min, puis refroidissement à 38-40°C. On l'acidifie ensuite par adjonction de ferments du yaourt constitués d'un mélange de lactobacillus bulgaricus et streptococcus thermophilus. On remplit des pots de 125 ml avec le liquide acidifié, on étuve les pots jusqu'à pH 4,7, puis on les refroidit à 8°C et on les entrepose à cette température.

A titre de comparaison, on procède à la fabrication de yaourt maigre à partir de 100 parties de lait écrémé enrichi avec 2,75 parites de poudre de lait écrémé, dissoute à froid dans le lait, auquel on ajoute une solution d'agent de texture du commerce constitué de 75 % de gélatine et de 25 % de concentrat de protéines sériques dénaturées à moins de 20 %. On prépare l'agent de texture par dissolution séparée à 70°C de 0,35 partie dans 2,5 parties d'eau, puis on ajoute la solution au lait enrichi. Le reste des opérations a lieu comme indiqué ci-dessus.

Une dégustation comparative a montré que l'agent de texture préparé selon l'invention apportait une amélioration nette de l'onctuosité et de la sensation de gras. De plus, la fabrication est facilitée du fait qu'il n'est pas nécessaire de dissoudre séparément l'agent de texture.

### Exemple 13

### Production de yaourt nature doux demi-écrémé, étuvé

Dans 100 parties de lait demi-écrémé, à 11g/l de matière grasse, on dissout à froid 3 parties de poudre d'agent de texture obtenu selon l'exemple 1 sous agitation.On traite alors le liquide à 92°C, pendant 6 min., on l'homogénéise à 300 bar avec un étage et à 75°C, puis on le refroidit à 40°C. On l'acidifie ensuite par adjonction de ferments du yaourt constitués d'un mélange de lactobacillus bulgaricus et streptococcus thermophilus. On remplit des pots de 125 ml avec le liquide acidifié, on étuve les pots jusqu'à pH 4,7, puis on les refroidit à 8°C et on les entrepose à cette température.

A titre de comparaison, on procède à la fabrication de yaourt doux demi-écrémé à partir de 100 parties de lait demi-écrémé enrichi avec 3 parties de poudre de lait écrémé, dissoute à froid dans le lait.

Une dégustation comparative a montré que l'agent de texture préparé selon l'invention apportait une amélioration nette de l'onctuosité et de la sensation de gras.

### Exemple 14

### Production de yaourt au lait entier brassé

Dans 100 parties de lait entier, à 35g/l de matière grasse, on dissout à froid 5,5 parties de poudre d'agent de texture obtenu selon l'exemple 1 sous agitation. On traite alors le liquide à 92°C, pendant 6 min., on l'homogénéise à 300 bar avec un étage et à 75°C, puis on le refroidit à 40°C. On l'acidifie ensuite par adjonction de ferments du yaourt constitués d'un mélange de lactobacillus bulgaricus et streptococcus thermophilus, puis on l'étuve en cuve stérile jusqu'à pH 4,7. On lisse ensuite la masse à l'aide d'une vanne à la pression de 1,5 bar, on refroidit à 8°C à l'aide d'un échangeur à plaques, puis on remplit des pots de 125 ml avec le liquide lissé et on les entrepose à cette température.

A titre de comparaison, on procède à la fabrication de yaourt entier brassé à partir de 100 parties de lait entier enrichi avec 5,5 parties de poudre de lait écrémé, dissoute à froid dans le lait.

Une dégustation comparative a montré que l'agent de texture préparé selon l'invention apportait une amélioration nette de l'onctuosité.

### Exemple 15

### Production de fromage frais maigre à 0% de matière grasse

Dans 99 parties de lait écrémé, on dissout 1 partie d'agent de texture préparé selon l'exemple 1 à froid et sous agitation. On pasteurise le liquide à 95°C pendant 5 min, puis on l'envoie en cuve stérilisée maintenue à 20-30°C. On ajoute ensuite 1 ml/100 l de présure animale au 1/10.000 ème et 1 % de ferments mésophiles, puis on laisse acidifier jusqu'à pH 4,4. On sépare alors le caillé sur centrifugeuse à buses de 0,5 mm afin d'obtenir un coagulum de 13 à 19 % de matière sèche. Après refroidissement à 8°C au moyen d'un échangeur tubulaire, on conditionne le produit en pots que l'on entrepose à cette température.

A titre de comparaison, on procède à la fabrication de fromage frais maigre à partir de 100 parties de lait écrémé, sans ajout d'agent de texture.

Une dégustation comparative a montré que l'agent de texture préparé selon l'invention apportait une amélioration nette de l'onctuosité.

## Revendications

1. Procédé de fabrication d'un agent de texture pour produits laitiers, caractérisé par le fait que l'on prépare une matière première lactique contenant de la caséine et des protéines sériques dans un rapport pondéral caséine: protéines sériques de 70:30 à 40:60, que l'on ajuste le cas échéant le pH à 6,1-6,7 par addition d'un agent acidifiant, que l'on soumet le mélange à un traitement thermique à 70-95°C pendant 1-15 min de manière à former des coprécipités, qu'on le soumet à un fort cisaillement et qu'on le sèche.

2. Procédé selon la revendication 1, caractérisé par le fait que les protéines sériques proviennent de lactosérum doux et sont obtenues par une méthode qui maintient en grande partie leur état natif, c'est à dire qu'elles sont dénaturées au maximum à environ 20 %

3. Procédé selon la revendication 1, caractérisé par le fait que l'on ajuste le pH par addition d'acide lactique ou par une acidification biologique produisant l'acide lactique nécessaire.

4. Procédé selon la revendication 1, caractérisé par le fait que le mélange est mis en solution sous agitation pendant le temps nécessaire à la réhydratation des protéines sériques, notamment environ 30 min.

5. Procédé selon la revendication 1, caractérisé par le fait que l'on réalise le traitement thermique dans un appareillage assurant une montée progressive en température jusqu'à 85-90°C et un maintien à cette température pendant 5 à 10 min.

6. Procédé selon la revendication 1, caractérisé par le fait que, après le traitement thermique, on soumet le mélange thermisé à une homogénéisation dans des conditions poussées, en un ou deux étages, à une pression globale de 300-400 bar et à une température de 65-70°C.

7. Procédé selon la revendication 1, caractérisé par le fait que l'on concentre le mélange thermisé dans un évaporateur, puis on le sèche par pulvérisation dans une tour de séchage dans des conditions moyennes.

8. Procédé de fabrication d'un produit laitier à texture améliorée, caractérisé par le fait qu'on y incorpore 2 à 6 % en poids d'un agent de texture obtenu par le procédé selon l'une des revendications 1 à 7.

9. Procédé selon la revendication 8, caractérisé par le fait que le produit laitier est un produit frais fermenté, notamment un yaourt étuvé ou brassé ou un fromage frais.

10. Procédé selon la revendication 8, caractérisé par le fait que le produit laitier est une crème glacée ou une sauce.
